# EUROPEAN PATENT APPLICATION

(11) **EP 2 327 666 A1**
(43) Date of publication of application: **01.06.2011**
(21) Application number: 10396008.4
(22) Date of filing: 28.10.2010
(51) Int. Cl.: C02F 3/04, C02F 3/10

(54) **Apparatus for purifying of waste water**

(30) Priority: 28.10.2009 FI 20090395
(71) Applicant: Flink, Raimo, 33900 Tampere (FI)
(72) Inventor: Flink, Raimo, 33900 Tampere (FI)
(74) Representative: Nieminen, Taisto Tapani

(57) **Abstract**

Apparatus (1) for purifying of waste water that is meant for purifying various waste waters comprising a container (2) into which the water to be purified is directed, a water division line (7) adjusted to the upper part of the container (2), further a bottom plate (14) located in the lower part of the container (2) on top of which bottom plate net sacks (11a, 11b etc) filled with mass are adjusted the purpose of which net sacks it is to receive water that runs from the water division line (7) located above. The net sacks (11a, 11b, etc) contain ground mass that penetrates air which ground mass consists of the mixture of solid matter particles and pieces of cloth or alike.

## Description

### Apparatus for Purifying of Waste water

The aim of the invention is a waste-water purification apparatus that is meant for purifying various waste waters comprising a container into which the water to be purified is directed, a water division line adjusted at the upper part of the container, further a bottom plate located at the lower part of the container on top of which bottom plate net sacks have been adjusted the purpose of which net sacks it is to receive the water that runs from the water division line located above.

The equipment is mainly meant for purifying the waste waters of the real estates in the sparsely populated area and the waste waters of the summer cottages. In the equipment pre-precipitated waste water is filtered and directed through specific net sacks. If the maintenance of the pre-precipitation and the filtering are neglected and the precipitates are able to block the net sacks, they are easy to lift up by hand and wash clean. The equipment can be installed under the ground or on top of the ground while being used in the summer.

Previously various purification methods of waste waters are known in which purification methods solid matter and for example nitrogen and phosphor are removed. According to the waste water regulation 542/2003 at least 90 % of the solid matter, 40 % of the nitrogen and 85 % of the phosphor must be removed. During the sand filtering waste waters are pre-sedimentated in 1- 3 precipitation well(s) and are directed to the sand filtering or a ground soakage. The sludge is removed from the precipitation wells with a sewage suction truck 1 -2 times a year. Another commonly known method is a so called small-scale purification plant. In that method all the waste water is directed to a purification plant the accumulated sludge of which purification plant is removed at intervals with a sewage suction truck. The phosphor is removed by precipitating chemically and nutrients and nitrogen are removed by aerating the waste water with machines. At the traditional summer cottages and increasingly also in the detached houses of the sparsely populated area various dry closets are used instead of water closets. Because these flume waters do not contain urine or excrements they are called grey waste waters and the cleaning devices are called grey water filters. For example peat, moss, cutter chips and plastic sections are used as filter mediums in the filters.

There are a lot of disadvantages in the existing methods and devices. Ground treatment requires a lot of room and construction costs are considerable because of the great amount of sand and crushed stone. The biggest problem of the sand filter is the sand layer that becomes blocked when the bacterial precipitate accumulates on the surface of the filter sand. According to experience the dephosphorization ability of the sand decreases year after year and the blocked sand layers with their crushed stones must be changed at intervals of 5 - 15 years. The result of this is an expensive work that breaks the court area and a removal of the contaminated soil. The disadvantage of the small-scale purification plant is a high acquisition price, proness to defects, a continuous need for maintenance and effluent water that contains bacteria. The costliness of the dephosphorization chemicals also causes the fact that the addition of the chemical is neglected and thus the most important feature of the purification plant is annuled. In practise it has been stated that the process cannot cope with long interruptions in use or shock loadings. In the grey waste waters the small-scale purification plant does not function at all because of the too low nutrient content. The existing grey water filters are according to their name only filters, but not purification plants. This is due to the fact that the bacteria that eat the nutrients do not get oxygen because of the filtering medium that is too thick. In addition to that the maintenance of the filters is hard because of the frequent changing of the filtering medium.

With the device according to the invention an essential improvement can be achieved regarding the disadvantages shown above. In order to achieve this, what has been shown in the characterizing part of the claim 1 is characteristic of the device according to the invention

The invention has various advantages compared to the existing devices. The most important idea is the contents of the aeration sacks. Large granules allow the air to circulate inside the net sacks and pieces of cloth give enough growing base for the bacteria. Neither of the materials would function in the desired way by itself. Another idea is the fact that the net sacks can be lifted up, if needed, and can be washed. The net sacks replace the sand and crushed stone used in the sand filters and replace the mechanical aeration used in the small-scale purification plants. Compared to the small-scale purification plant the purification plant according to the invention is technically more reliable because no air pump and electricity are needed in there except in exceptional cases.

In the following the invention is described more detailed by referring to the accompanying drawing 1.

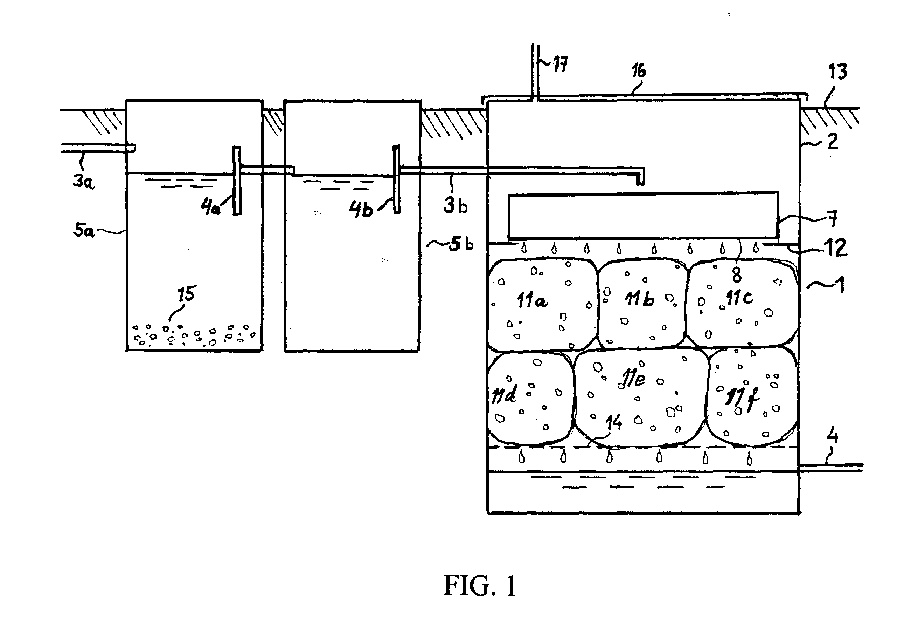

Figure 1 shows diagrammatically a sack purification plant 1 according to the invention as a side view. The container 2 of the purification plant 1 is usually sunk to the ground 13. There is a lid 16 and a air pipe 17 in the container 2. The dirty waste water runs through a pipe 3a to the first precipitation well 5a to which the coarsest precipitate 15 accumulates. The waste water runs further to another precipitation well 5b through a T-pipe 4a. The T-pipes 4a and 4b stop for example the progression of oil existing in the waste water. From the precipitation well 5b the waste water runs through a pipe 3b to a water division line 7 that rests on the supports 12. The water runs through a bottom 8 with holes of the water division line 7 on to the net sacks 11a, 11 b resting on top of the bottom plate 14 with holes. The net sacks are filled for example with a mixture consisting of crushed stone and pieces of cloth. The waste water that has been purified becomes removed through a pipe 4 into a ditch or to a ground soakage. The ground mass located into the net sacks 11 a, 11b etc consists of the particles that keep their shape, for example of rock material parts or for example of plastic particles moulded specially for this purpose, such as rings or sleeves. The pieces of cloth for their part can be strips or alike torn or twisted fabric or thread materials.

Especially it must be noted that the device according to the invention is a very multipurpose device. The shape can be something else than a round container, too. When the sack purification plant is big enough and equipped with precipitation wells, it is suitable not only for waste waters, but also for purifying contaminated river and lake waters. The invention is easy to install, it is economical, does not normally need electricity and requires only a little amount of maintenance. The fabric waste is used in the sacks of the purification plant which fabric waste can thus be recycled, when used like this. Also it must be stated that the invention is not limited to the examples shown in the description part and drawings, but it can be modified within the limits of the accompanying claims.

## Claims

1. Apparatus (1) for purifying of waste water that is meant for purifying various waste waters comprising a container (2) into which the water to be purified is directed, a water division line (7) adjusted to the upper part of the container (2), further a bottom plate (14) located in the lower part of the container (2) on top of which bottom plate net sacks (11a, 11b etc) filled with mass are adjusted the purpose of which net sacks it is to receive water that runs from the water division line (7) located above, **characterized in that** the net sacks (11a, 11b, etc) contain ground mass that penetrates air which ground mass consists of the mixture of solid matter particles and pieces of cloth or alike.

2. Apparatus (1) according to claim 1, **characterized in that** the ground mass consists of solid matter particles that keep their shape and of a mixture of pieces of cloth in order to form an advantageous surface for bacteria.

3. Apparatus (1) according to claim 1, **characterized in that** the pieces of cloth or alike pieces are pieces, strips or alike torn or twisted fabric or thread materials.

4. Apparatus (1) according to claim 1, **characterized in that** the solid matter particles are parts that have a shape that is regular or formless in which case when they are packed into a sack (11), stable air pockets are formed between them.
